# EUROPÄISCHE PATENTANMELDUNG

(11) **EP 3 064 421 A1**
(43) Veröffentlichungstag der Anmeldung: **07.09.2016**
(21) Anmeldenummer: 16150991.4
(22) Anmeldetag: 13.01.2016
(51) Int. Cl.: B62M 1/28, B62M 1/10

(54) **ANTRIEB FÜR EIN PEDALGETRIEBENES FAHRZEUG**

(30) Priorität: 05.03.2015 DE 102015203897
(71) Anmelder: ROBERT BOSCH GMBH, 70442 Stuttgart (DE)
(72) Erfinder: Kimmich, Peter, 71144 Steinenbronn (DE); Braun, Sigmund, 72127 Kusterdingen (DE); Kaechele, Uwe, 72813 St. Johann-Wuertingen (DE); Schock, Wolfram, 72770 Ohmenhausen (DE)

(57) **Zusammenfassung**

Die Erfindung betrifft einen Linear-Antrieb eines pedalgetriebenen Fahrzeugs, umfassend wenigstens ein erstes Pedal (2), wenigstens eine erste Umlenkrolle (4) und eine zweite Umlenkrolle (5), wenigstens ein um die erste Umlenkrolle (4) und die zweite Umlenkrolle (5) umlaufendes Zugmittels (6), wobei das erste Pedal (2) mit dem Zugmittel (6) an einem Fixierbereich (14) verbunden ist, wenigstens ein erstes Führungselement (7) zum Führen des ersten Pedals (2), und eine elektrische Maschine (9) mit einer Rotationswelle (19), wobei die Rotationswelle (19) mit der ersten Umlenkrolle (4) verbunden ist.

## Beschreibung

### Stand der Technik

Die vorliegende Erfindung betrifft einen Antrieb für ein pedalgetriebenes Fahrzeug, insbesondere für ein motorisch und/oder mit Muskelkraft betreibbares Fahrzeug, wie z.B. ein Elektrofahrrad oder einem Cargo-Fahrrad mit elektrischem Hilfsantrieb, wobei der erfindungsgemäße Antrieb ein Linear-Antrieb mit linearer Pedalbewegung ist.

In jüngster Zeit werden verstärkt neben normalen Fahrrädern auch Elektrofahrräder am Markt angeboten, welche mittels motorischer und/oder Pedalkraft durch Fahrer angetrieben werden können. Ein üblicher Fahrradantrieb wird dabei durch eine Kreisbewegung durch Betätigung eines Kurbeltriebs realisiert. Das vom Radfahrer erzeugte Drehmoment wird dann über eine Kette oder einen Zahnriemen oder eine Kardanwelle oder dgl. an ein Hinterrad des Fahrzeugs übertragen. Durch die notwendige Kreisbewegung am Kurbeltrieb nehmen derartige Antriebe einen relativ großen Bauraum ein. Auch ist es häufig notwendig, Verkleidungen im Bereich des Kurbeltriebs vorzusehen, um Füße und Beine des Radfahrers zu schützen. Aus der DE 4015491 A1 ist ein Linear-Tretantrieb für Fahrräder bekannt, bei welchem eine Vielzahl von Umlenkrädern und eine Vielzahl von Zugmitteln vorgesehen sind. Die gegensinnig drehenden Antriebskettenräder sind dabei mittels Freiläufen mit einem Abtriebskettenrad verbunden, um eine ständige Drehrichtungsänderung der Antriebskettenräder auf das Abtriebskettenrad mit gleichem Drehsinn zu übertragen. Dieser bekannte Antrieb ist relativ kompliziert und wartungsintensiv und nimmt insbesondere einen sehr großen Bauraum ein.

### Offenbarung der Erfindung

Der erfindungsgemäße Linear-Antrieb für ein pedalgetriebenes Fahrzeug mit den Merkmalen des Anspruchs 1 weist demgegenüber den Vorteil auf, dass er einen einfachen und kostengünstigen Aufbau und insbesondere einen sehr platzsparenden Aufbau aufweist. Weiterhin kann ein Fahrer das pedalgetriebene Fahrzeug über einen langen Zeitraum mittels Muskelkraft antreiben. Ein Fahrer kann üblicherweise eine Leistung von mehr als 250 W nur über einige Minuten erbringen, etwas geringere Leistung von ca. 180 W dagegen über Stunden. Bei einer Nutzung des pedalgetriebenen Fahrzeugs bedeutet dies, dass z.B. beim Beschleunigen des Fahrzeugs z.B. im Stadtverkehr nach einem Ampelstopp oder dgl. ein hoher Leistungsbedarf von über 400 W für kurze Zeit notwendig ist. Dadurch wird ein Fahrer erschöpft. Würde der Fahrer stattdessen die ganze Zeit, auch während des Anhaltens des Fahrzeugs mit ca. 180 W treten, wäre er nicht erschöpft und eine zusätzlich erbrachte Energie könnte gespeichert werden und dann für einen Start des Fahrzeugs genutzt werden. Dies ist erfindungsgemäß dadurch möglich, dass eine elektrische Maschine vorgesehen ist, welche mit einer Umlenkrolle des Fahrzeugs verbunden ist. Das pedalgetriebene Fahrzeug umfasst dabei wenigstens ein Pedal, wenigstens eine erste und zweite Umlenkrolle und ein die beiden Umlenkrollen verbindendes Zugmittel, z.B. eine Kette oder dgl. Das erste Pedal ist dabei an einem ersten Führungselement geführt. Die elektrische Maschine ist nun mit einer der Umlenkrollen verbunden und kann z.B. im Stillstand des Fahrzeugs als Generator betrieben werden, so dass ein Tretvorgang des Fahrers die elektrische Maschine generatorisch betreibt und die erzeugte Energie kann dann gespeichert werden und für einen Start des Fahrzeugs verwendet werden.

Die Unteransprüche zeigen bevorzugte Weiterbildungen der Erfindung.

Vorzugsweise umfasst das pedalgetriebene Fahrzeug ein zweites Pedal, welches ebenfalls mit dem Zugmittel verbunden ist. Das zweite Pedal ist dabei an einem zweiten Führungselement geführt.

Besonders sind das erste und/oder zweite Führungselement als lineare Führungsstange oder lineare Führungsnut ausgebildet.

Für einen besonders kompakten Aufbau liegen bevorzugt die erste und zweite Umlenkrolle in einer gemeinsamen Ebene derart, dass Mittelachsen der ersten und zweiten Umlenkrolle die gemeinsame Ebene senkrecht schneiden. Dadurch ist kein Verdrehen des Zugmittels notwendig.

Weiter bevorzugt umfasst das pedalgetriebene Fahrzeug ferner wenigstens ein Rückstellelement, um das erste und/oder zweite Pedal jeweils in eine Ausgangsstellung zurückzustellen. Besonders bevorzugt ist dabei nur genau ein Rückstellelement vorgesehen, welches vorzugsweise das erste und/oder zweite Pedal in die Ausgangsstellung zurückstellt.

Alternativ umfasst das pedalgetriebene Fahrzeug ein erstes Rückstellelement für das erste Pedal und ein zweites Rückstellelement für das zweite Pedal. Weiter alternativ ist genau ein Rückstellelement vorgesehen, wobei das genau eine Rückstellelement das erste Pedal mit dem zweiten Pedal verbindet. Gemäß einer weiteren bevorzugten Alternative sind an einem der Pedale wenigstens zwei Rückstellelemente angeordnet. Die beiden Rückstellelemente greifen dabei an dem Pedal derart an, dass die Rückstellkräfte der Rückstellelemente in entgegengesetzte Richtungen wirken.

Gemäß einer weiteren bevorzugten Ausgestaltung der vorliegenden Erfindung sind die erste und zweite Umlenkrolle derart angeordnet, dass eine Gerade durch eine Mittelachse der ersten und zweiten Umlenkrolle parallel zu einem Führungselement zum Führen des Pedals ist.

Weiter bevorzugt ist das Zugmittel zwischen der ersten und zweiten Umlenkrolle in wenigstens einem ersten Winkel geführt. Hierdurch kann auf Rückstellelemente oder dgl. verzichtet werden, da durch das Führen des Zugmittels in einem Winkel ein gewisses federndes Verhalten erhalten werden kann. Eine für das federnde Verhalten notwendige Verformung kann dabei im Zugmittel selbst oder in einer Anbindung des Zugmittels an die Pedale oder in einer der Umlenkrollen auftreten. Weiter alternativ kann die für das federnde Verhalten notwendige Verformung in einer in der Umlenkrolle enthaltenen Komponente oder in einer Führung der Pedale oder einer im Führungselement selbst enthaltenen Komponente bereitgestellt werden. Auch kann beispielsweise eine federnde Lagerung der Umlenkrollen vorgesehen werden. Dadurch sind insbesondere keine Rückstellelemente notwendig, so dass ein Aufbau und Platzbedarf des Antriebs signifikant reduziert werden kann.

Besonders bevorzugt ist das Zugmittel zwischen der ersten Umlenkrolle sowohl über einen ersten Winkel als auch über einen zweiten Winkel geführt. Dadurch kann ein noch besseres federndes Verhalten des Antriebs erreicht werden. Der erste Winkel ist vorzugsweise in einem Obertrum und der zweite Winkel in einem Untertrum des Zugmittels vorgesehen.

Besonders bevorzugt ist der Winkel am Zugmittel an einem Fixierbereich des Zugmittels am Pedal vorgesehen.

Weiter bevorzugt ist die elektrische Maschine derart ausgelegt, dass diese sowohl als Elektromotor als auch als Generator betreibbar ist. Somit kann mit einer einzigen elektrischen Maschine sowohl Energie durch den Fahrer erzeugt werden, als auch die gespeicherte Energie über die elektrische Maschine an das Fahrzeug abgegeben werden und z.B. bei einem Fahrzeugstart verwendet werden.

Gemäß einer weiteren bevorzugten Ausgestaltung der vorliegenden Erfindung sind die Umlenkrollen des Antriebs unterschiedlich groß.

Weiter bevorzugt ist ein Getriebe vorgesehen, welches zwischen der elektrischen Maschine und der mit der elektrischen Maschine verbundenen Umlenkrolle angeordnet ist.

Ferner betrifft die vorliegende Erfindung ein motorisch und/oder mit Muskelkraft betreibbares Fahrzeug mit einem erfindungsgemäßen Antrieb. Das Fahrzeug ist vorzugsweise ein Elektrofahrrad, z.B. ein Pedelec oder Cargo-Bike oder dgl., mit elektrischem Antrieb.

Weiter bevorzugt umfasst das erfindungsgemäße Fahrzeug einen elektrischen Antrieb, welcher vom Linearantrieb mit elektrischer Energie versorgt wird.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht eines linearen Antriebs für ein pedalgetriebenes Fahrzeug gemäß einem ersten Ausführungsbeispiel der Erfindung,
- Figur 2: eine schematische Ansicht eines Antriebs gemäß einem zweiten Ausführungsbeispiel der Erfindung,
- Figur 3: eine schematische Ansicht eines Antriebs gemäß einem dritten Ausführungsbeispiel der Erfindung,
- Figur 4: eine schematische Ansicht eines Antriebs gemäß einem vierten Ausführungsbeispiel der Erfindung,
- Figur 5: eine schematische Ansicht eines Antriebs gemäß einem fünften Ausführungsbeispiel der Erfindung in einer Ruhelage,
- Figur 6: eine schematische Ansicht des Antriebs von Figur 5 in einer ausgelenkten Lage,
- Figur 7: eine schematische Ansicht eines Antriebs gemäß einem sechsten Ausführungsbeispiel der Erfindung in einer Ruhelage,
- Figur 8: eine schematische Ansicht des Antriebs von Figur 7 in einer ausgelenkten Lage,
- Figur 9: eine schematische Ansicht eines Antriebs gemäß einem siebten Ausführungsbeispiel der Erfindung in einer Ruhelage,
- Figur 10: eine schematische Ansicht des Antriebs von Figur 9 in einer ausgelenkten Lage,
- Figur 11: eine schematische Ansicht eines Antriebs gemäß einem achten Ausführungsbeispiel der Erfindung in einer Ruhelage, und
- Figur 12: eine schematische Ansicht des Antriebs von Figur 11 in einer ausgelenkten Lage.

### Bevorzugte Ausführungsformen der Erfindung

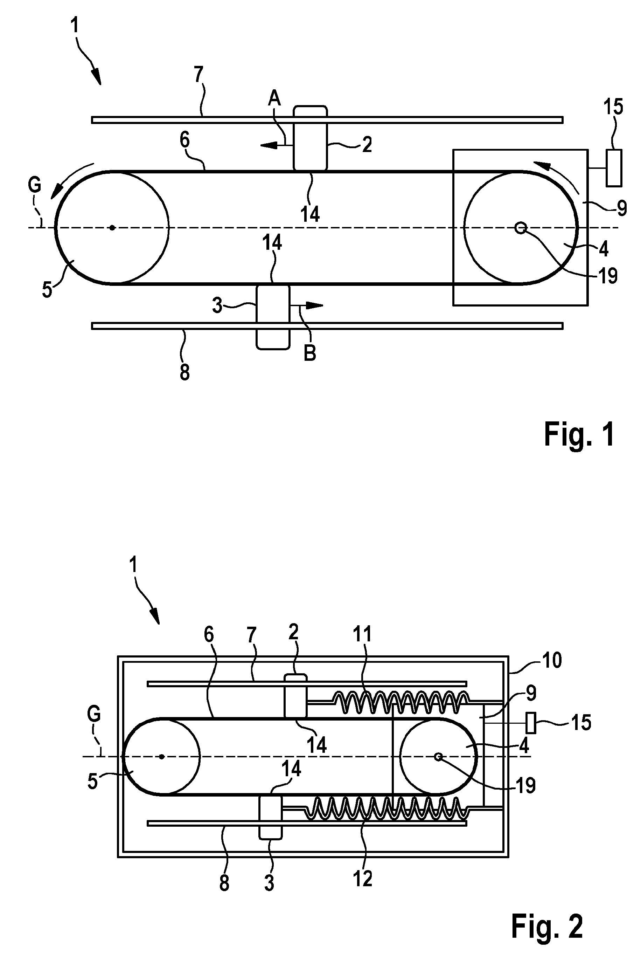

Nachfolgend wird unter Bezugnahme auf Figur 1 ein Antrieb 1 für ein pedalgetriebenes Fahrzeug im Detail beschrieben.

Wie aus Figur 1 ersichtlich ist, umfasst der lineare Antrieb ein erstes Pedal 2 und ein zweites Pedal 3, welche jeweils an Fixierbereichen 14 mit einem Zugmittel 6 verbunden sind. Das Zugmittel 6 ist beispielsweise eine umlaufende Kette oder ein umlaufend geschlossenes Seil. Ferner umfasst der Antrieb 1 eine erste Umlenkrolle 4 und eine zweite Umlenkrolle 5, um welche das Zugmittel 6 umläuft (vgl. Figur 1).

Ferner ist eine elektrische Maschine 9 vorgesehen, welche sowohl als Generator als auch als Elektromotor verwendet werden kann. Ein elektrischer Speicher 15, z.B. ein Akku, ist mit der elektrischen Maschine 9 verbunden, um elektrische Energie zu speichern, welche durch Generatorbetrieb der elektrischen Maschine 9 erhalten wird.

Wie weiter aus Figur 1 ersichtlich ist, sind das erste Pedal 2 an einem ersten Führungselement 7 und das zweite Pedal 3 an einem zweiten Führungselement 8 geführt. Das erste und zweite Führungselement 7, 8 sind dabei als gerade, stangenförmige Führungselemente ausgebildet und ermöglichen die Linearbewegung der ersten und zweiten Pedale 2, 3, wenn ein Fahrer diese betätigt. Eine Gerade G durch Mittelpunkte der Umlenkrollen 4, 5 verläuft parallel zu den Führungselementen 7, 8.

Die Anordnung der Führungselemente 7, 8 und somit des gesamten Antriebs 1 kann dabei in horizontaler Lage oder auch in vertikaler Lage sein. Der Antrieb kann auch in einer Zwischenposition zwischen diesen beiden Extrempositionen angeordnet sein.

Die elektrische Maschine 9 ist über eine Welle 19 der elektrischen Maschine mit der ersten Umlenkrolle 4 verbunden. Dadurch kann eine Rotation der ersten Umlenkrolle 4 auf die Welle 19 der elektrischen Maschine übertragen werden und in der elektrischen Maschine in elektrischen Strom umgewandelt werden und im Speicher 15 gespeichert werden.

Die Funktion des erfindungsgemäßen Antriebs für ein pedalgetriebenes Fahrzeug, wie z.B. ein Elektrofahrrad, ist dabei wie folgt. Figur 1 zeigt eine Ruhelage des Antriebs 1. Wenn ein Fahrer auf das erste Pedal 2 tritt, was in Figur 1 durch den Pfeil A angedeutet ist, bewegt sich das zweite Pedal 3 in Richtung des Pfeils B, da die Pedale 2, 3 über das Zugmittel 6 miteinander verbunden sind. Die vom Fahrer aufgebrachte Kraft kann dann beispielsweise an der zweiten Umlenkrolle 5 für einen Vortrieb des Fahrzeugs genutzt werden. Die Pedale 2, 3 werden dabei linear entlang der Führungselemente 7, 8 bewegt. Sobald eine Endposition erreicht ist, kann der Fahrer nun das zweite Pedal 3 treten, so dass sich die Drehrichtung des Zugmittels 6 umkehrt. Damit das Fahrzeug im Bereich der zweiten Umlenkrolle 5 nicht rückwärts angetrieben wird, ist hier z.B. ein Freilauf und eine Einrichtung zur Drehrichtungsumkehr vorgesehen, um von einer Abtriebswelle eine gleiche Drehrichtung für den Vortrieb des Fahrzeugs zu haben.

Durch die Rückbewegung des Zugmittels 6 wird ebenfalls die erste Umlenkrolle 4 betrieben, welche über die Welle 19 dann beispielsweise einen generatorischen Betrieb der elektrischen Maschine 9 bewirken kann, um elektrische Energie zu erzeugen. Dies kann dann durch die elektrische Maschine selbst in einen Antrieb des Fahrzeugs umgewandelt werden oder alternativ ist eine zweite elektrische Maschine vorgesehen, um das Fahrzeug anzutreiben, wobei der im Speicher 15 gespeicherte elektrische Strom verwendet wird.

Figur 2 zeigt einen Antrieb 1 gemäß einem zweiten Ausführungsbeispiel der Erfindung. Im Unterschied zum ersten Ausführungsbeispiel weist das zweite Ausführungsbeispiel ein erstes Federelement 11 und ein zweites Federelement 12 auf. Das erste Federelement 11 ist zwischen dem ersten Pedal 2 und einem Rahmen 10 des Antriebs angeordnet. Das zweite Federelement 12 ist zwischen dem zweiten Pedal 3 und dem Rahmen 10 angeordnet. Die Federelemente 11, 12 dienen zur Rückstellung der Pedale 2, 3 in die in Figur 2 gezeigte Ausgangsposition (Ruheposition). Durch das Vorsehen der Rückstellelemente muss ein Fahrer daher nicht mehr wie im ersten Ausführungsbeispiel zur Verzögerung seiner Füße eine Kraft entgegen der Bewegungsrichtung ausüben, was zu einem Dehnen der Muskeln des Fahrers entgegen ihrer Kraft führt (exzentrische Kontraktion der Muskeln). Somit kann bei diesem Ausführungsbeispiel ein besserer Wirkungsgrad des Systems umfassend Muskelfasern, Mechanik und elektrische Maschine, erreicht werden. Weiterhin bewirken die Federelemente 11, 12, dass bei einem Richtungswechsel einer Bewegung des Zugmittels 6 diese Totpunkte schneller überwunden werden können. Da die elektrische Maschine bei dem Richtungswechsel ebenfalls ihre Drehrichtung ändert, kann durch schnellere Überwindung der Totpunkte ein Wirkungsgrad der elektrischen Maschine im Generatorbetrieb verbessert werden.

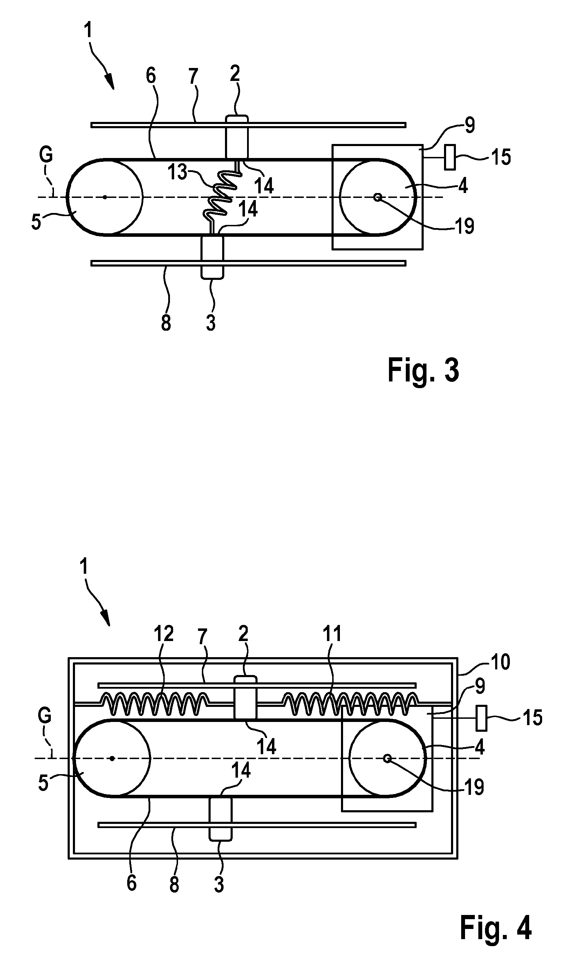

Figur 3 zeigt ein drittes Ausführungsbeispiel eines Antriebs 1 gemäß der Erfindung. Das dritte Ausführungsbeispiel umfasst genau ein Rückstellelement 13, welches das erste Pedal 2 mit dem zweiten Pedal 3 verbindet. Die Funktion dieses Ausführungsbeispiels entspricht dem des zweiten Ausführungsbeispiels, wobei dies mit nur genau einem Rückstellelement 13 erreicht wird.

Figur 4 zeigt ein viertes Ausführungsbeispiel, welches ähnlich dem zweiten Ausführungsbeispiel ist, wobei ein erstes und ein zweites Federelement 11, 12 verwendet werden. Wie aus Figur 4 ersichtlich ist, sind das erste und das zweite Federelement jedoch beide am ersten Pedal 2 fixiert. Dabei greifen das erste und zweite Federelement 11, 12 derart am ersten Pedal 2 an, dass die Federkräfte in entgegengesetzte Richtungen wirken. Auch somit wird eine Rückstellung des Antriebs in die in Figur 4 gezeigte Ruhelage aus jeder Betriebsposition erreicht.

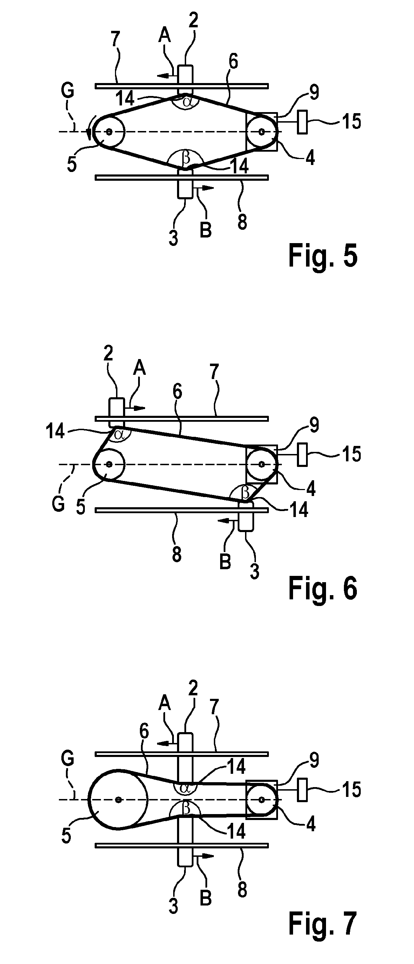

Die Figuren 5 bis 12 zeigen Antriebe für pedalgetriebene Fahrzeuge gemäß weiteren Ausführungsbeispielen, wobei keine separaten Federelemente vorgesehen sind, sondern federnde Eigenschaften in die Bauteile selbst integriert sind.

Bei dem in Figur 5 gezeigten fünften Ausführungsbeispiel ist das Zugmittel 6 am ersten Pedal 2 und am zweiten Pedal 3 derart fixiert, dass am Fixierbereich 14 des Zugmittels 6 am ersten Pedal 2 ein erster Winkel α und am Fixierbereich 14 des Zugmittels 6 am zweiten Pedal 3 ein zweiter Winkel β vorgesehen sind. Durch diese Anordnung wird das Zugmittel 6 unter Spannung gesetzt, wobei zum Erreichen eines federnden Verhaltens eine gewisse Verformung des Zugmittels 6 notwendig ist. Somit wird beim fünften Ausführungsbeispiel eine Linearbewegung der Pedale 3 nicht mehr parallel zu einer Bewegung des Zugmittels 6 ausgerichtet, sondern in einem Winkel zum Zugmittel 6. Wenn die Pedale 2, 3 aus der in Figur 5 gezeigten Ruhelage in eine, wie z.B. in Figur 6 gezeigte ausgelenkte Lage überführt werden, wird das Zugmittel 6 und die Umlenkrollen 4, 5 einer Spannung ausgesetzt, welche von den Positionen der Pedale abhängig ist.

Statt des federnden Verhaltens des Zugmittels 6 selbst kann auch eine gewisse Verformung im Bereich des Fixierbereichs 14, d.h., den Bereich der Anbindung des Zugmittels 6 an die Pedale möglich sein. Weiter alternativ kann ein federndes Verhalten auch in einer der Umlenkrollen oder in einer die Umlenkrollen erhaltenden Komponenten, z.B. eine federnde Lagerung der Umlenkrollen, ermöglicht werden. Weiter alternativ könnte auch ein federndes Verhalten im Bereich der Führung der Pedale an den Führungselementen 7, 8 vorgesehen werden. Weiter alternativ könnte auch das Führungselement mittels eines federnden Bauteils gehalten sein. Wie aus den Figuren 5 und 6 ersichtlich ist, sind der erste und zweite Winkel im Bereich des Fixierbereichs 14 als stumpfer Winkel mit ca. 150° ausgebildet. Im ausgelenkten Zustand (Figur 6) reduziert sich die Größe des stumpfen Winkels auf ca. 110°.

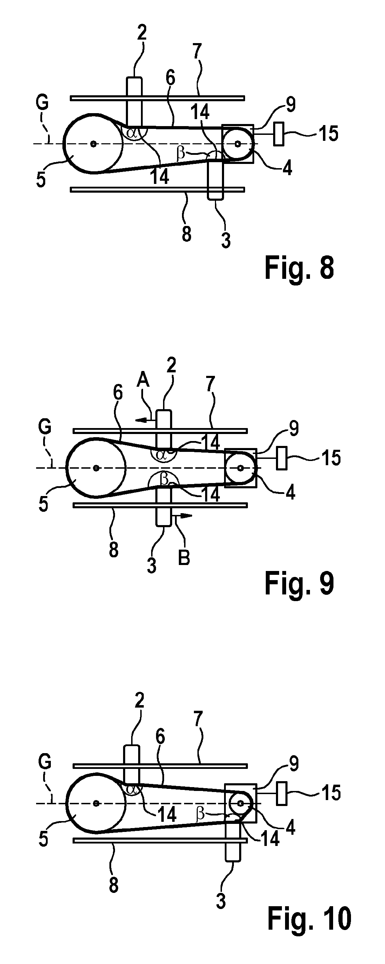

Die Figuren 7 und 8 zeigen ein sechstes Ausführungsbeispiel der Erfindung, bei dem ebenfalls ein federndes Zugmittel 6, wie im fünften Ausführungsbeispiel, vorgesehen sind. Der erste Winkel α und der zweite Winkel β sind dabei als überstumpfe Winkel mit ca. 190° vorgesehen. Weiterhin ist beim sechsten Ausführungsbeispiel eine Größe der ersten Umlenkrolle 4 unterschiedlich zu einer Größe der zweiten Umlenkrolle 5. Wie aus den Figuren 7 und 8 ersichtlich, ist die erste Umlenkrolle 4 deutlich kleiner als die zweite Umlenkrolle 5 ausgebildet. Dadurch kann auf einfache Weise der überstumpfe Winkel im Zugmittel 6 im Bereich des Fixierbereichs 14 ermöglicht werden.

Die Figuren 9 und 10 zeigen einen Linear-Antrieb 1 gemäß einem siebten Ausführungsbeispiel der Erfindung. Bei diesem Ausführungsbeispiel ist die erste Umlenkrolle 4 sehr viel kleiner als die zweite Umlenkrolle 5 ausgebildet. Ein Durchmesser der ersten Umlenkrolle 4 und der zweiten Umlenkrolle 5 ist dabei derart gewählt, dass bei der in Figur 9 gezeigten Ruhelage des Antriebs das Zugmittel 6 zwischen den beiden Umlenkrollen noch eine Gerade bildet (vgl. Figur 9). Sobald eine Auslenkung erfolgt, bildet sich ein überstumpfer erster Winkel α oder ein stumpfer Winkel β im Bereich des zweiten Pedals 3 (vgl. Figur 10). Bei dieser Ausgestaltung wirkt somit keine Federkraft in der in Figur 9 gezeigten Ruhelage auf das Zugmittel 6.

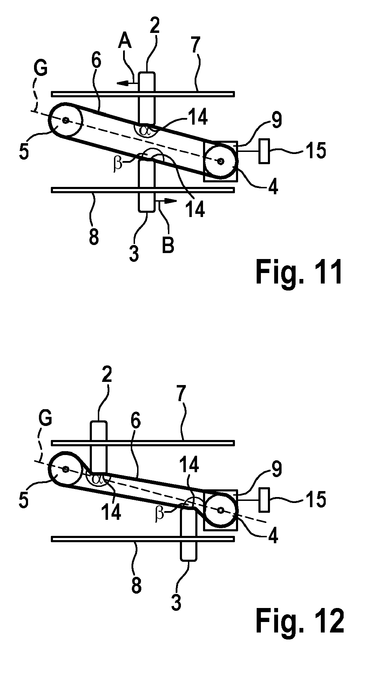

Die Figuren 11 und 12 zeigen einen Linear-Antrieb 1 gemäß einem achten Ausführungsbeispiel der Erfindung. Bei diesem Ausführungsbeispiel liegt eine Gerade G durch die Mittelpunkte der Umlenkrollen 4, 5 derart, dass diese nicht parallel zu den Führungselementen 7, 8 ist, sondern diese schneidet. Auch dadurch kann ein federndes Verhalten des Zugmittels 6 oder anderer, wie oben beschriebener Komponenten, erreicht werden. Hierbei wird, wie aus Figur 12 ersichtlich ist, in der ausgelenkten Position der erste Winkel α und der zweite Winkel β jeweils ein überstumpfer Winkel.

Zu den in den Figuren 5 bis 12 gezeigten Ausführungsbeispielen sei angemerkt, dass somit separate Rückstellelemente nicht notwendig sind, sondern die federnden Verhalten in die schon vorhandenen Bauteile, wie z.B. Zugmittel, Umlenkrollen 4, 5, Fixierungen der Umlenkrollen 4, 5 oder Fixierungen der Führungselemente 7, 8 oder die Fixierbereiche 14 integriert werden. Dadurch kann die Bauteilezahl weiter reduziert werden. Auch können zwei oder mehr Bauteile federnde Eigenschaften aufweisen.

## Patentansprüche

1. Linear-Antrieb eines pedalgetriebenen Fahrzeugs, umfassend:
- wenigstens ein erstes Pedal (2),
- wenigstens eine erste Umlenkrolle (4) und eine zweite Umlenkrolle (5),
- wenigstens ein um die erste Umlenkrolle (4) und die zweite Umlenkrolle (5) umlaufendes Zugmittel (6),
- wobei das erste Pedal (2) mit dem Zugmittel (6) an einem ersten Fixierbereich (14) verbunden ist,
- wenigstens ein erstes Führungselement (7) zum Führen des ersten Pedals (2), und
- eine elektrische Maschine (9) mit einer Rotationswelle (19), wobei die Rotationswelle (19) mit der ersten Umlenkrolle (4) verbunden ist.

2. Linear-Antrieb nach Anspruch 1, **gekennzeichnet durch** ein zweites Pedal (3), welches an einem zweiten Fixierbereich (14) mit dem Zugmittel (6) verbunden ist und mit einem zweiten Führungselement (8) geführt ist.

3. Linear-Antrieb nach einem der vorhergehenden Ansprüche, **dadurch**
**gekennzeichnet, dass** das erste und/oder zweite Führungselement (7, 8) eine lineare Führungsstange oder eine lineare Nut ist.

4. Linear-Antrieb nach einem der vorhergehenden Ansprüche, **dadurch**
**gekennzeichnet, dass** die erste Umlenkrolle (4) und die zweite Umlenkrolle (5) in einer gemeinsamen Ebene liegen, derart, dass Mittelachsen der ersten und zweiten Umlenkrolle die gemeinsame Ebene senkrecht schneiden.

5. Linear-Antrieb nach einem der vorhergehenden Ansprüche,
**gekennzeichnet durch** wenigstens ein Rückstellelement (11, 12), um den Antrieb in eine Ruhelage zurückzustellen.

6. Linear-Antrieb nach Anspruch 5, **dadurch gekennzeichnet, dass** das erste Pedal (2) mit einem ersten Rückstellelement (11) verbunden ist und das zweite Pedal (3) mit einem zweiten Rückstellelement (12) verbunden ist.

7. Linear-Antrieb nach Anspruch 5, **dadurch gekennzeichnet, dass** das erste Pedal (2) mit dem zweiten Pedal (3) über genau ein Rückstellelement (13) verbunden ist.

8. Linear-Antrieb nach Anspruch 5, **dadurch gekennzeichnet, dass** am ersten Pedal (2) wenigstens zwei Rückstellelemente angreifen, deren Rückstellkraft in entgegengesetzte Richtungen wirkt.

9. Linear-Antrieb nach einem der vorhergehenden Ansprüche, **dadurch gekennzeichnet, dass** eine Gerade (G) durch Mittelachsen der ersten und zweiten Umlenkrolle (4, 5) parallel zum ersten Führungselement (7) zum Führen des ersten Pedals (2) ist.

10. Linear-Antrieb nach einem der vorhergehenden Ansprüche, **dadurch gekennzeichnet, dass** das Zugmittel (6) zwischen der ersten und zweiten Umlenkrolle (4, 5) über einen ersten Winkel (α) geführt ist.

11. Linear-Antrieb nach Anspruch 10, **dadurch gekennzeichnet, dass** das Zugmittel (6) zwischen der ersten und zweiten Umlenkrolle (4, 5) über einen zweiten Winkel (β) geführt ist.

12. Linear-Antrieb nach Anspruch 10 oder 11, **dadurch gekennzeichnet, dass** der erste Winkel (α) und/oder der zweite Winkel (β) am Fixierbereich (14) des Zugmittels (6) am ersten und/oder zweiten Pedal (2, 3) gebildet ist.

13. Linear-Antrieb nach einem der Ansprüche 10 bis 12, **dadurch gekennzeichnet, dass** der erste Winkel (α) und/oder der zweite Winkel (β) ein überstumpfer Winkel ist.

14. Linear-Antrieb nach einem der vorhergehenden Ansprüche, **dadurch gekennzeichnet, dass** die elektrische Maschine (9) als Elektromotor oder als Generator betreibbar ist.

15. Linear-Antrieb nach einem der vorhergehenden Ansprüche, **dadurch gekennzeichnet, dass** die erste Umlenkrolle (4) einen anderen Durchmesser als die zweite Umlenkrolle (5) aufweist.

16. Linear-Antrieb nach einem der vorhergehenden Ansprüche, **gekennzeichnet durch** ein Getriebe, welches zwischen der elektrischen Maschine (9) und der ersten Umlenkrolle (4) angeordnet ist.

17. Pedalgetriebenes Fahrzeug, insbesondere Elektrofahrrad, umfassend einen Linear-Antrieb nach einem der vorhergehenden Ansprüche.

18. Pedalgetriebenes Fahrzeug nach Anspruch 17, ferner umfassend einen Elektromotor für einen Antrieb des pedalgetriebenen Fahrzeugs, welcher von der elektrischen Maschine des Linearantriebs mit elektrischer Energie versorgbar ist.
